# EUROPÄISCHE PATENTSCHRIFT

(11) **EP 1 700 657 B1**
(45) Veröffentlichungstag und Bekanntmachung des Hinweises auf die Patenterteilung: **06.08.2008**
(21) Anmeldenummer: 06004697.6
(22) Anmeldetag: 08.03.2006
(51) Int. Cl.: B23D 45/02, B23D 47/02

(54) **Gehrungssäge**
Mitre saw
Scie à onglet

(30) Priorität: 08.03.2005 DE 102005011325
(43) Veröffentlichungstag der Anmeldung: 13.09.2006
(73) Patentinhaber: elumatec GmbH & Co. KG, 75417 Mühlacker (DE)
(72) Erfinder: Hettler, Andreas, 75417 Mühlacker (DE); Lutz, Eugen, 75417 Mühlacker (DE)
(74) Vertreter: Patentanwälte Ruff, Wilhelm, Beier, Dauster & Partner

(56) Entgegenhaltungen:
- DE-U1- 29 811 101

## Beschreibung

Die Erfindung betrifft eine Gehrungssäge mit einem kreisförmigen Sägeblatt nach dem Oberbegriff des Patentanspruchs 1.

Aus dem deutschen Gebrauchsmuster G 9307192.2 ist eine Auslegerkreissäge bekannt, bei der ein kreisförmiges Sägeblatt und eine Antriebseinrichtung parallel zu einer Werkstückauflage an einem Ausleger verschiebbar angeordnet sind. Der Ausleger selbst ist in vertikaler Richtung, senkrecht zur Werkstückauflage an einer Säule höhenverstellbar angeordnet. Die Säule selbst ist um eine parallel zur Werkstückauflage liegende Neigeachse neigbar. Die gesamte Konstruktion ruht auf einer Basis, die wiederum um eine mit einem Werkstückanschlag fluchtende Schwenkachse schwenkbar angeordnet ist. Die Neigeachse liegt zum einen in der Werkstückauflage und zum anderen liegt auch das Sägeblatt in einer Ebene, die die Neigeachse und die Schwenkachse enthält.

Aus der deutschen Offenlegungsschrift DE 44 11 255 A1 ist eine Sägemaschine für Gehrungs- und Schifterschnitte bekannt, bei der ein kreisförmiges Sägeblatt, das von unten durch eine Werkstückauflagefläche hindurch nach oben führt und dann horizontal in das Werkstück hineingeführt wird, an einem Ausleger befestigt ist, der an einer Säule längsverschiebbar gelagert ist. Die Säule ist wiederum schwenkbar mit einem Haltearm verbunden, wobei die Schwenkachse stets in der Ebene einer Werkstückauflage liegt. Der Anlenkpunkt der Säule an dem Haltearm ist darüber hinaus parallel zur Werkstückauflage verschiebbar ausgebildet. Der Haltearm wiederum ist L-förmig ausgestaltet und mittels eines Schwenklagers mit einer Maschinenbasis verbunden. Die Schwenkachse liegt dabei senkrecht zur Neigeachse und parallel zu einem Werkstückanschlag. Ein Schnittpunkt der Schwenkachse und der Neigeachse liegt stets auf einer Schnittlinie zwischen Werkstückauflage und Werkstückanschlag. Da die Säule, an der der Ausleger mit der Antriebseinrichtung und dem Sägeblatt befestigt ist, als Ganzes um die Neigeachse geschwenkt wird, kann das Sägeblatt auch in einer zur Vertikalen geneigten Richtung in ein Werkstück eintauchen. Auf diese Weise sind Schifterschnitte möglich. Ein Eintauchen des Sägeblattes von oben in das Werkstück ist nicht möglich.

Aus der DE 298 11 101 U1 (D1) ist eine Säge nach dem Oberbegriff des Anspruches 1 bekannt. Die dort beschriebene Säge ist so ausgelegt, dass sie Schnitte durch das Werkstück, auch Schrägschnitte mit zu einer Horizontalebene geneigtem Sägeblatt, von der Seite her, d.h. durch eine horizontale Bewegung auf das Werkstück zu, vornimmt. Das Sägeaggregat ist um eine vertikale Achse C schwenkbar gelagert, die jedoch relativ weit von der Drehachse des Sägeblattes entfernt ist. Gehrungsschnitte in senkrecht zum Werkstück stehenden Ebenen sind daher nur umständlich und mit wenig Präzision erreichbar.

Mit der Erfindung soll eine Gehrungssäge bereitgestellt werden, die bei einfachem Aufbau unabhängig von einem eingestellten Schwenkwinkel oder Neigewinkel des Sägeblatts stets dessen maximale Schnitttiefe, eine hohe Präzision und ein Eintauchen des Sägeblattes in das Werkstück von oben her ermöglicht.

Die Erfindung besteht ausgehend von einer Gehrungssäge nach dem Oberbegriff des Patentanspruches 1 bzw. des Patentanspruches 2 insoweit er unabhängig ist in den kennzeichnenden Merkmalen des Anspruches 1 bzw. des Anspruches 2. Dabei ist es vorteilhaft, wenn die Basis des L-artigen Haltearmes oben liegt oder wenn der U-artige Haltebügel nach unten offen ist.

Indem stets ein kreisabschnittförmiger Bereich des Sägeblatts mit nennenswerter Größe vollständig in das Werkstück eintauchen kann und zwar unabhängig von einer gewählten Eintauchrichtung, kann die durch die geometrischen Abmessungen des Sägeblatts vorgegebene maximale Schnitttiefe unabhängig von der Eintauchrichtung und dem eingestellten Drehwinkel stets erhalten bleiben. Die grundlegende Idee der Erfindung besteht dabei darin, dass zur Realisierung der maximalen Schnitttiefe unabhängig von der Eintauchrichtung relativ zum Werkstück und unabhängig vom Drehwinkel des Sägeblatts der Antrieb und ein Haltearm des Sägeblatts so gestaltet sein müssen, dass bei allen vorgesehenen Eintauchrichtungen ein großer kreisabschnittförmiger Bereich des Sägeblatts, vorzugsweise annähernd die Hälfte des Sägeblatts, in das Werkstück eintauchen kann.

Vorteihafte Ausführungsformen der Erfindung sind den abhängigen Ansprüchen zu entnehmen.

Vorteilhafterweise beträgt die Länge der Sehne jeweils zwischen 90% und 98% des Sägeblattdurchmessers.

Durch die erfindungsgemäße Gehrungssäge kann unabhängig davon, ob nun ein Schwenkwinkel oder ein Neigewinkel eingestellt sind, immer die maximale Schnitttiefe des Sägeblatts genutzt werden, da die Eintauchrichtung entweder parallel zur Schwenkachse, beispielsweise von oben nach unten, oder parallel zur Neigeachse, beispielsweise von hinten in das Werkstück hinein, eingestellt werden kann. Dadurch werden die bei konventionellen Gehrungssägen erheblichen Einschränkungen der Schnitttiefe bei großen Schwenk- oder Neigewinkeln vollständig vermieden. Darüber hinaus kann mit der erfindungsgemäßen Gehrungssäge auch ein Schwenkwinkel von ± 90° neben einem Neigewinkel von ± 90° abgedeckt werden, jeweils ohne Schnitttiefenverlust. Überraschenderweise lässt sich durch die Erfindung eine konstruktiv gut beherrschbare und günstig aufbaubare Gehrungssäge bereitstellen, die bezüglich der abgedeckten Schwenkwinkel und Neigewinkel flexibel einsetzbar ist und die vor allem unabhängig vom Schwenkwinkel oder Neigewinkel stets die maximale Schnitttiefe bereitstellt. Da aufgrund der beim Sägen auftretenden dynamischen Kräfte am Sägeblatt dieses nicht beliebig vergrößert werden kann, ist dies bei der Verarbeitung von modernen Profilen mit großem Querschnitt von großer Bedeutung. Die erfindungsgemäße Gehrungssäge vermeidet darüber hinaus auch die problematische Programmierung von Sägerobotern, deren Sägeblätter entweder um virtuelle Drehpunkte schwenken oder deren Schwenk- bzw. Neigungsachsen keinen festen Bezug zum Werkstückanschlag oder zur Werkstückauflage aufweise. Vorteilhafterweise wird bei der erfindungsgemäßen Gehrungssäge das Sägeblatt so zum Werkstück ausgerichtet, dass beim Einstellen eines Schwenkwinkels die Schwenkachse mit dem Werkstückanschlag fluchtet oder bei Einstellen eines Neigewinkels die Neigeachse mit der Werkstückauflage fluchtet. Dies erlaubt die Einstellung eines Schwenkwinkels oder eines Neigewinkels, ohne aufwändige Korrekturen bei der Längenbemessung der bearbeiteten Profile vornehmen zu müssen. Eine solche Ausrichtung der Schwenkachse bzw. der Neigeachse erlaubt darüber hinaus auch ein Spannen des Werkstücks sehr nahe am Sägeblatt, da dieses durch Schwenken oder Neigen nicht auswandert. Mit der erfindungsgemäßen Gehrungssäge lässt sich daher auch eine hohe Schnittpräzision erzielen. Abweichungen von der beschriebenen Lage der Schwenkachse oder der Neigeachse sind aber einstellbar, beispielsweise dann, wenn bewusst nicht der vollständige Querschnitt eines Profils auf Gehrung gesägt werden soll, sondern lediglich ein Teil hiervon. In diesem Fall kann beispielsweise die Schwenkachse bewusst hinter den Werkstückanschlag verschoben werden, so dass nach Verschwenken des Sägeblattes dieses seitlich auswandert und somit einen seitlich versetzten Gehrungsschnitt ausführt.

Durch die erfindungsgemäße Gestaltung der Antriebseinheit kann sichergestellt werden, dass annähernd drei Viertel des Sägeblatts nicht von der Antriebseinrichtung abgedeckt sind und dass damit das Sägeblatt in zwei zueinander senkrechten Richtungen bis zur maximalen Schnitttiefe in ein Werkstück eintauchen kann. Dies erfordert, dass die Antriebseinrichtung und auch ein Haltearm für die Antriebseinrichtung so ausgebildet sind, dass sie lediglich etwa ein Viertel des Sägeblatts abdecken. Es ist im übrigen in Bezug auf die Verschmutzungsgefahr der Antriebseinheit vorteilhaft, die Eintauchrichtung so zu wählen, dass die Antriebseinrichtung entweder über oder neben dem Werkstück angeordnet ist. Anfallende Späne bewegen sich dadurch grundsätzlich der Schwerkraft folgend von der Antriebseinrichtung weg, so dass die Verschmutzungsgefahr deutlich verringert ist.

Gemäß der Erfindung verläuft bei Einstellung eines Schwenk-oder Neigewinkels in Bezug auf eine senkrecht zur Schwenkachse und senkrecht zur Neigeachse gesehen ellipsenförmige Projektion des Sägeblatts die Eintauchrichtung in ein Werkstück parallel zur größeren EIlipsenachse.

In vorteilhafter Weiterbildung der Erfindung liegt in Richtung der Antriebswelle gesehen eine Außenkontur der Antriebseinrichtung innerhalb eines rechtwinklig begrenzten Bereichs, dessen Schenkel parallel zur Schwenkachse bzw. parallel zur Neigeachse liegen. Vorteilhafterweise ist die Antriebseinrichtung wenigstens in ihrem eine Antriebswelle umgebenden Bereich schnabelförmig gestaltet.

Auf diese Weise wird es möglich, bei den beiden erfindungsgemäß senkrecht zueinander stehenden Eintauchrichtungen jeweils die maximal erzielbare Schnitttiefe zu nutzen. Wird das Sägeblatt um die Schwenkachse gedreht, wird eine Eintauchrichtung parallel zur Schwenkachse gewählt. Wird das Sägeblatt dahingegen um die Neigeachse gedreht, wird die Eintauchrichtung parallel zur Neigeachse gewählt.

In vorteilhafter Weiterbildung der Erfindung weist in Richtung der Antriebswelle gesehen die Antriebseinrichtung in ihrem die Antriebswelle umgebenden Bereich senkrecht zur Antriebswelle angeordnete Begrenzungsflächen auf, die spitzwinklig oder maximal in einem rechten Winkel aufeinander zulaufen.

Durch eine solche Ausgestaltung der Antriebseinrichtung wird der erforderliche Platz geschaffen, um das Eintauchen bis zur maximalen Schnitttiefe in zwei zueinander senkrechten Richtungen zu ermöglichen.

Gemäß einer alternativen Gestaltung der Erfindung ist ein U-artiger Haltebügel vorgesehen, wobei an einem ersten Schenkel des U-artigen Haltebügels die Antriebseinrichtung mittels der Schwenkeinrichtung schwenkbar angeordnet ist und wobei ein zweiter Schenkel mittels der Neigeeinrichtung relativ zu einer Maschinenbasis neigbar ist.

Ein solcher U-artiger Haltebügel kann beispielsweise als verripptes Gussteil und ausreichend steif ausgebildet sein, um eine sehr hohe Schnittpräzision zu gewährleisten. Das Vorsehen des U-artigen Haltebügels schafft darüber hinaus den Platz, um die Antriebseinrichtung beispielsweise im Extremfall um ± 90° um die Schwenkachse verdrehen zu können. Der U-artige Haltebügel ist vorteilhafterweise so angeordnet, dass er sich nach unten öffnet. Gerade bei Bearbeitungszentren für die Profilbearbeitung ist der Platz unter der Werkstückauflage sehr knapp, nach oben hin steht dahingegen üblicherweise mehr Raum zur Verfügung. Die Anordnung der Antriebseinrichtung oberhalb bzw. seitlich des Werkstücks ist, wie bereits erläutert wurde, auch vorteilhaft in Bezug auf die Verschmutzungsgefahr durch Späne.

In vorteilhafter Weiterbildung der Erfindung ist der zweite Schenkel mittels der Neigeeinrichtung mit einem Zwischenstück verbunden, das mittels der Verschiebeeinrichtungen parallel zur Schwenkachse und parallel zur Neigeachse verschiebbar ist. Auf diese Weise liegen die Verschieberichtungen zu einer Maschinenbasis stets fest, so dass lediglich Gehrungsschnitte, aber keine Schifterschnitte möglich sind. Die vorgesehene Anordnung der Verschiebeeinrichtung ermöglicht aber einen konstruktiv einfachen Aufbau, der kostengünstig ausführbar ist und vor allem eine hohe Schnittpräzision ermöglicht.

In vorteilhafter Weiterbildung der Erfindung ist das Zwischenstück an einer Säule parallel zur Schwenkachse verschiebbar angeordnet und die Säule ist auf einer Maschinenbasis parallel zur Neigeachse verschiebbar angeordnet.

Durch diese Maßnahmen wird ein sehr stabiler Aufbau erzielt und speziell müssen die Drehlager für die Schwenkachse bzw. die Neigeachse nicht auch noch das Gewicht der Maschinenbasis und der Säule mittragen. Dies erlaubt eine kostengünstige Ausführung der Säge bei hoher Schnittpräzision. Die Maschinenbasis selbst kann dann, wenn die Gehrungssäge beispielsweise Teil eines Bearbeitungszentrums ist, wiederum auf einem verfahrbaren Schlitten angeordnet sein.

In vorteilhafter Weiterbildung der Erfindung weisen die Schwenkeinrichtungen, die Neigeeinrichtungen und/oder die Verschiebeeinrichtungen Servoantriebe auf, wodurch sich eine hochpräzise Einstellbarkeit erzielen lässt.

Weitere Merkmale und Vorteile der Erfindung ergeben sich aus den Ansprüchen und der folgenden Beschreibung einer bevorzugten Ausführungsform der Erfindung im Zusammenhang mit den Zeichnungen. Merkmale der einzelnen Ausführungsformen der Erfindung lassen sich dabei in beliebiger Weise miteinander kombinieren, ohne den Rahmen der Erfindung zu verlassen.

In den Zeichnungen zeigen:
- Fig. 1: eine Seitenansicht der erfindungsgemäßen Gehrungssäge in einer Position, in der um eine vertikale Schwenkachse verschwenkte Schnitte ausgeführt werden können,
- Fig. 2: die Gehrungssäge der Fig. 1 in einer Position, in der um eine horizontale Neigeachse geneigte Schnitte ausgeführt werden können,
- Fig. 3a, 3b und 3c: Draufsichten auf die Gehrungssäge der Fig. 1 in unterschiedlichen Einstellwinkeln um eine vertikale Schwenkachse,

- Fig. 4a, 4b und 4c: Vorderansichten der Gehrungssäge der Fig. 1 in verschiedenen Einstellwinkeln um eine Neigeachse,
- Fig. 5: eine Seitenansicht einer weiteren Ausführungsform der erfindungsgemäßen Gehrungssäge in einer ersten Position und
- Fig. 6: eine Seitenansicht der Gehrungssäge der Fig. 5 in einer zweiten Position.

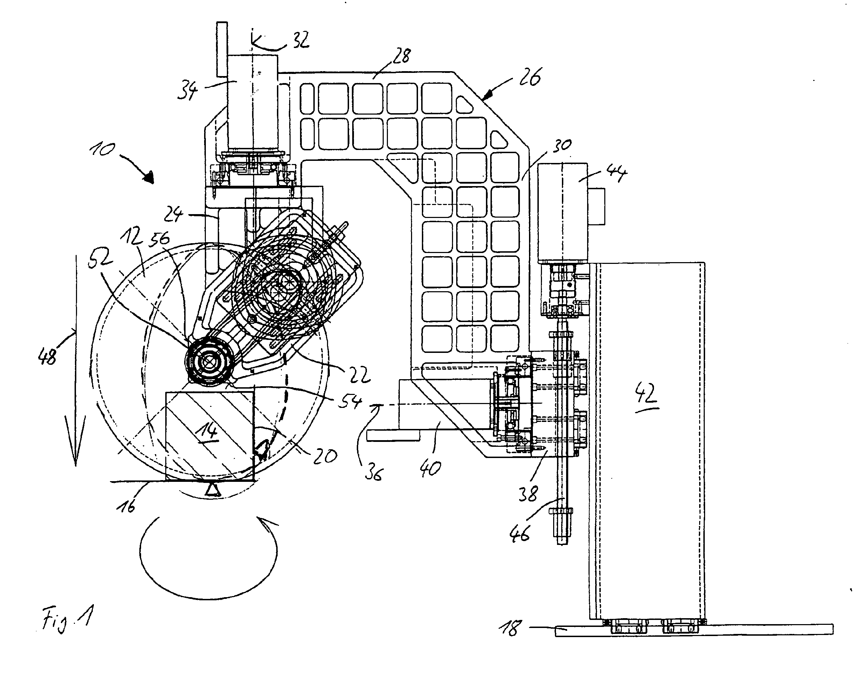

Eine erfindungsgemäße Gehrungssäge 10, wie sie in der Fig. 1 dargestellt ist, weist ein kreisförmiges Sägeblatt 12 auf, das in ein Werkstück 14 eintauchen kann. Das Werkstück 14 liegt auf einer Werkstückauflage 16 auf, die lediglich schematisch angedeutet und relativ zu einer Maschinenbasis 18 unbeweglich angeordnet ist, wie durch ein Dreiecksymbol angedeutet. Ebenfalls unbeweglich zu der Maschinenbasis 18 angeordnet und im rechten Winkel zur Werkstückauflage 16 angeordnet ist ein ebenfalls nur schematisch angedeuteter Werkstückanschlag 20.

Das Sägeblatt 12 ist mittels einer Antriebseinrichtung 22 drehbeweglich antreibbar, wobei die Antriebseinrichtung 22 an einem ersten Schenkel 24 eines U-artigen Haltebügels 26 angeordnet ist. Der erste Schenkel 24 des U-artigen Haltebügels 26 ist gegenüber dem übrigen Haltebügel 26, d.h. dessen Basis 28 und dessen zweiten Schenkel 30, um eine Schwenkachse 32 verdrehbar. Hierzu ist der erste Schenkel 24 an der Basis 28 drehbar gelagert und eine Winkelposition um die Schwenkachse 32 kann mittels eines Servoantriebs 34 eingestellt werden. In der Seitenansicht der Fig. 1 gesehen ist das Sägeblatt 12 in einer um die Schwenkachse 32 verschwenkten Position gestrichelt dargestellt. In dieser gestrichelten Ansicht, entsprechend einer Projektion des dann verschwenkten Sägeblatts 12 senkrecht zur Zeichenebene der Fig. 1, erscheint das Sägeblatt 12 ellipsenförmig. Es ist dabei bereits festzustellen, dass in der Position der Fig. 1 die größere Ellipsenachse nach unten, in Richtung auf das Werkstück zeigt. Weiterhin ist festzustellen, dass dadurch bei einem Eintauchen in das Werkstück 14 parallel zur Schwenkachse 32 gegenüber einem unverschwenkten Zustand des Sägeblatts 12 immer noch unverändert die maximale Schnitttiefe erzielbar ist. Die unterschiedlichen Positionierungsmöglichkeiten für das Sägeblatt 12 werden nachstehend noch detailliert erläutert.

Die Basis 28 des U-artigen Haltebügels 26 ist einteilig mit dem zweiten Schenkel 30 des U-artigen Haltebügels 26 ausgebildet und in der dargestellten Ausführungsform bestehen die Basis 28 und der zweiter Schenkel 30 aus einem verrippten Gussteil, das eine extrem hohe Steifigkeit aufweist. Dies kommt der Schnittpräzision der Gehrungssäge 10 zugute. Wie in der Fig. 1 zu erkennen ist, ist der U-artige Haltebügel 26 so angeordnet, dass er sich nach unten, in Richtung auf die Werkstückauflage 16 bzw. auf die Maschinenbasis 18 hin öffnet.

Der zweite Schenkel 30 ist um eine Neigeachse 36 drehbar an einem Zwischenstück befestigt. Um den zweiten Schenkel 30 relativ zum Zwischenstück 38 um die Neigeachse 36 verschwenken zu können, ist ein Servoantrieb 40 vorgesehen. Bei Verdrehen des Haltebügels 26 um die Neigeachse 36 wird somit auch die Schwenkachse 32 zur Vertikalen geneigt, die Neigeachse 36 bleibt hingegen immer in einer horizontalen Lage.

Das Zwischenstück 38 ist wiederum verschiebbar an einer Säule 42 angeordnet und kann somit in der Darstellung der Fig. 1 nach oben und unten, bzw. von der Maschinenbasis 18 weg bzw. auf dieses zu in vertikaler Richtung verschoben werden. Zur Verschiebung des Zwischenstücks 38 an der Säule 42 ist ein weiterer Servoantrieb 44 vorgesehen, der eine Spindel 46 antreibt, die mit dem Zwischenstück 38 verbunden ist. Mittels des Servoantriebs 44 kann das Zwischenstück 38 und somit auch der gesamte U-artige Haltebügel 26 und das Sägeblatt 12 in einer Richtung verschoben werden, die stets senkrecht zur Werkstückauflage 16 und parallel zum Werkstückanschlag 20 liegt.

Die Säule 42 ist wiederum verschiebbar auf der Maschinenbasis 18 gelagert, so dass die Säule 42 in der Darstellung der Fig. 1 relativ zur Maschinenbasis 18 nach links und rechts verschoben werden kann. Die Säule 42 und damit der U-artige Haltebügel 26 mit dem Sägeblatt 12 können somit über die Führung der Säule 42 an der Maschinenbasis 18 in Richtungen verschoben werden, die stets parallel zur Werkstückauflage 16 und senkrecht zum Werkstückanschlag 20 liegen. Zur Verschiebung der Säule 42 relativ zum Maschinenfundament 18 ist ein weiterer, nicht dargestellter Servoantrieb vorgesehen.

Die Gehrungssäge 10 kann beispielsweise auch Teil eines Bearbeitungszentrums bilden und in diesem Fall kann es zweckmäßig sein, die Maschinenbasis 18 senkrecht zur Zeichenebene der Fig. 1, d.h. parallel zu einer Längsrichtung des Werkstücks 14, verschiebbar auf einen nicht dargestellten Schlitten anzuordnen. Eine Verschieberichtung der Maschinenbasis 18, wenn diese verschiebbar auf einem Schlitten angeordnet ist, liegt somit stets parallel zur Werkstückauflage 16 und auch parallel zum Werkstückanschlag 20.

Mit der erfindungsgemäßen Gehrungssäge 10 lassen sich in der dargestellten Ausführungsform lediglich Gehrungsschnitte durchführen, bei denen also das Sägeblatt 12 entweder um die Schwenkachse 32 oder um die Neigeachse 36 geneigt ist. Aufgrund der speziellen, für die Ausführungsform der Fig. 1 gewählten Anordnung der Verschiebeachsen und Drehachsen sind sogenannte Schifterschnitte, bei denen das Sägeblatt 12 sowohl um die Schwenkachse 32 als auch die Neigeachse 36 geneigt wäre, nicht möglich.

Die erfindungsgemäße Gehrungssäge 10 erlaubt es aber, die durch den Durchmesser des Sägeblatts 12 vorgegebene maximale Schnitttiefe unabhängig vom eingestellten Gehrungswinkel zu realisieren, und zwar unabhängig davon, ob ein Schwenkwinkel um die Schwenkachse 32 oder ein Neigewinkel um die Neigeachse 36 eingestellt ist.

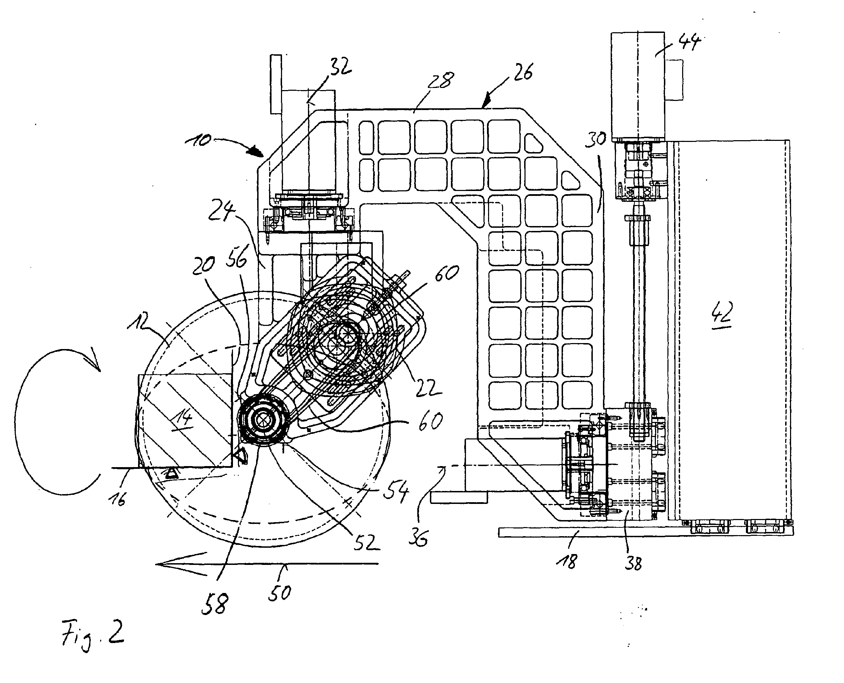

Wie anhand eines Vergleichs der Fig. 1 und 2 zu erkennen ist, lässt sich das Sägeblatt 12 mittels entsprechender Ansteuerung der Servoantriebe 34, 40 und 44 sowie des nicht dargestellten Servoantriebs zur Verschiebung der Säule 42 relativ zur Maschinenbasis 18 wahlweise so einstellen, dass der Mittelpunkt des Sägeblatts entweder oberhalb des Werkstücks 14, wie in Fig. 1 dargestellt ist, oder seitlich zum Werkstück, wie in Fig. 2 dargestellt ist, angeordnet ist. Wie anhand der jeweils gestrichelten Darstellung des Sägeblatts 12 in Fig. 1 und Fig. 2 zu erkennen ist, zeigt sowohl in Fig. 1, das bedeutet bei Anordnung des Mittelpunkts des Sägeblatts 12 oberhalb des Werkstücks, als auch in Fig. 2, das bedeutet bei einer Anordnung des Mittelpunkts des Sägeblatts 12 seitlich vom Werkstück, eine längere Ellipsenachse der Projektion des jeweils gestrichelt dargestellten Sägeblatts 12 in Richtung auf das Werkstück. Damit ist bereits zu erkennen, dass unabhängig davon, ob nun ein Schwenkwinkel um die Schwenkachse 32 gemäß Fig. 1 oder ein Neigewinkel um die Neigeachse 36 gemäß Fig. 2 eingestellt wird, immer die durch den Durchmesser des Sägeblatts 12 vorgegebene maximale Schnitttiefe erreicht wird. In analoger Weise könnte, um die maximale Schnitttiefe zu erreichen, das Sägeblatt 12 auch unter dem Werkstück 14 oder davor oder dahinter angeordnet werden.

Eine Eintauchrichtung bei Einstellung eines Schwenkwinkels um die Schwenkachse 32 liegt somit senkrecht zur Werkstückauflage 16 und parallel zum Werkstückanschlag 20 und der Eintauchvorgang des Sägeblatts 12 in das Werkstück 14 wird mittels des Servoantriebs 44 ausgeführt. Hierzu wird das Zwischenstück 38 entlang der Säule 42 von oben nach unten verschoben, so dass auch der U-artige Haltebügel 26 mit der daran befestigten Antriebseinrichtung 32 nach unten bewegt wird und das Sägeblatt 12 in das Werkstück 14 eintaucht. Diese erste Eintauchrichtung ist mittels eines Pfeiles 48 angedeutet, wobei die Eintauchrichtung 48 bei Einstellung eines Schwenkwinkels um die Schwenkachse 32 zu wählen ist, selbstverständlich aber auch dann gewählt werden kann, wenn ein Schwenkwinkel von 0° um die Schwenkachse 32 eingestellt ist und das Sägeblatt 12 somit in seiner in Fig. 1 durchgezogen dargestellten Lage ist, d.h. senkrecht zum Werkstückanschlag 20 und senkrecht zur Werkstückauflage 16. Wie in der Fig. 1 dargestellt ist, liegt bei Einstellung eines Schwenkwinkels um die Schwenkachse 32 die Schwenkachse 32 vorteilhafterweise in der Ebene des Werkstückanschlags 20. Dies verhindert ein Auswandern des Sägeblatts 12 bei Einstellung unterschiedlicher Schwenkwinkel und erleichtert somit die Längenbestimmung der zu bearbeitenden Werkstücke erheblich. Darüber hinaus kann beim Fluchten von Schwenkachse 32 und Werkstückanschlag 20 das Werkstück 14 sehr eng am Sägeblatt 12 gespannt werden, da für die Einstellung unterschiedlicher Schwenkwinkel lediglich ein keilförmiger Zwickel rechts und links des Sägeblatts frei bleiben muss. Das Einspannen des Werkstücks 14 in unmittelbarer Nachbarschaft zur Lage des auszuführenden Schnittes kommt einer hohen Schnittpräzision zugute.

Bei Einstellung eines Neigewinkels um die Neigeachse 36 wird das Sägeblatt 12 relativ zum Werkstück 14 dahingegen so positioniert, wie es in der Fig. 2 dargestellt ist. Vorteilhafterweise liegt bei dieser Positionierung der Gehrungssäge 10 die Neigeachse 36 in der Ebene der Werkstückauflage 16. Wie bereits anhand der Fig. 1 erläutert wurde, kann das Werkstück 14 dadurch eng am Sägeblatt 12 gespannt werden und die Längenmessung der zu bearbeitenden Profile ist erheblich erleichtert. Bei Einstellung von Neigewinkeln um die Neigeachse 36 wird eine Eintauchrichtung 50 des Sägeblatts 12 in das Werkstück 14 demnach so gewählt, dass die Eintauchrichtung 50 parallel zur Neigeachse 36 verläuft. Hierzu wird der U-artige Haltebügel 26 mittels einer Verschiebung des Zwischenstücks 38 über den Servoantrieb 44 zunächst so angeordnet, dass die Neigeachse 36 mit der Werkstückauflage 16 fluchtet. Gleichzeitig oder danach kann der gewünschte Neigewinkel um die Neigeachse 36 eingestellt werden. Das Eintauchen in das Werkstück 14 erfolgt dann mittels einer Linearbewegung der Säule 42 relativ zur Maschinenbasis 18, in der Fig. 2 demnach von rechts nach links gemäß der mit dem Pfeil 50 angedeuteten Eintauchrichtung.

Von der anhand der Fig. 1 und 2 beschriebenen Ausrichtung der Schwenkachse 32 so, dass diese mit dem Werkstückanschlag 20 fluchtet bzw. der Ausrichtung der Neigeachse 36 so, dass diese mit der Werkstückauflage 16 fluchtet, kann bewusst dann abgewichen werden, wenn sich ein Gehrungsschnitt nicht über den vollständigen Querschnitt eines Profils erstrecken soll, sondern wenn beispielsweise lediglich eine Ecke des vorderen Endes eines Profils auf Gehrung geschnitten werden soll. In diesem Fall kann dann beispielsweise die Schwenkachse 32 um ein zu bestimmendes Maß bewusst relativ zum Werkstückanschlag 20 verschoben werden. Beispielhaft erläutert würde ein Werkstück 14 zunächst mit einem Schwenkwinkel von 0° senkrecht zur Werkstückauflage 16 und senkrecht zum Werkstückanschlag 20 gekappt. Ein nachfolgender Gehrungsschnitt mit einem Schwenkwinkel verschieden von 0° um die Schwenkachse 32 wird dann bei relativ zum Werkstückanschlag 20 in Richtung auf die Säule 42 verschobener Schwenkachse 32 durchgeführt. Dies führt beim Eintauchen des Sägeblatts 12 dann dazu, dass lediglich eine der Säule 42 zugewandte hintere Ecke des Werkstücks 14 auf Gehrung gesägt wird. In analoger Weise kann auch die Neigeachse 36 bewusst relativ zur Werkstückauflage 16 zur Maschinenbasis 18 hin oder von dieser weg versetzt werden.

Anhand der Fig. 1 und 2 ist weiterhin zu erkennen, dass die Antriebseinrichtung 22 in ihrem, den Mittelpunkt des Sägeblatts 12 umgebenden Bereich schnabelartig ausgebildet ist. Das Gehäuse der Antriebseinrichtung 22 läuft zunächst spitzwinklig auf den Mittelpunkt des Sägeblatts 12 zu und in dem Bereich, der den Mittelpunkt des Sägeblatts 12 und somit eine Antriebswelle 52 unmittelbar umgibt, stehen die parallel zur Antriebswelle 52 verlaufenden Seitenflächen 54 und 56 der Antriebseinrichtung im rechten Winkel aufeinander. Wie in Fig. 1 und Fig. 2 zu erkennen ist, sind die Seitenflächen 54, 56 in Nulllage des Sägeblatts 12, das bedeutet bei einem Schwenkwinkel um die Schwenkachse 32 von 0° und einem Neigewinkel um die Neigeachse 36 um 0°; entsprechend der in Fig. 1 und Fig. 2 jeweils durchgezogenen Darstellung des Sägeblatts 12, immer so ausgerichtet, dass die erste Seitenfläche 54 parallel zur Werkstückauflage 16 verläuft und die zweite Seitenfläche 56 parallel zum Werkstückanschlag 20 verläuft. Aufgrund der Positionierung des Sägeblatts 12 in Abhängigkeit davon, ob ein Schwenkwinkel oder ein Neigewinkel eingestellt wird, können die Seitenflächen 54, 56 eben ausgebildet sein, da es beispielsweise bei einer Drehung um die Schwenkachse 32 unerheblich ist, ob die zweite Seitenfläche 56 dann ausgeschwenkt wird, da dann ja lediglich der in Fig. 1 unterhalb der ersten Seitenfläche 54 befindliche Abschnitt des Sägeblatts 12 in das Werkstück eintaucht. Die spezielle schnabelartige Gestaltung des Gehäuses der Antriebseinrichtung 22 wenigstens in dem Bereich, der die Antriebswelle 52 unmittelbar umgibt, schafft aber die Möglichkeit, dass das Sägeblatt 12 aus zwei voneinander verschiedenen und senkrecht zueinander stehenden Eintauchrichtungen 48, 50 in das Werkstück 14 eintauchen kann.

Speziell ist das Gehäuse der Antriebseinrichtung 22 so ausgebildet und die Antriebswelle 52 ist relativ zu dem U-artigen Halter 26 so angeordnet, dass die Antriebseinrichtung 22 lediglich geringfügig mehr als ein Viertel des Sägeblatts 12 abdeckt. Dadurch bleiben annähernd drei Viertel des Sägeblatts frei, wobei die freibleibende Fläche durch zwei Kreisabschnitte definiert werden kann, deren Sehnen senkrecht zueinander stehen. Um die maximale Eintauchtiefe des Sägeblatts 12 nutzen zu können, beträgt die Länge der senkrecht aufeinander stehenden Sehnen zwischen 90% und 98% des Sägeblattdurchmessers. Die erfindungsgemäßen Vorteile könnten aber auch noch dann genutzt werden, wenn die Länge der senkrecht aufeinander stehenden Sehnen der Kreisabschnitte lediglich die Hälfte des Sägeblattdurchmessers beträgt.

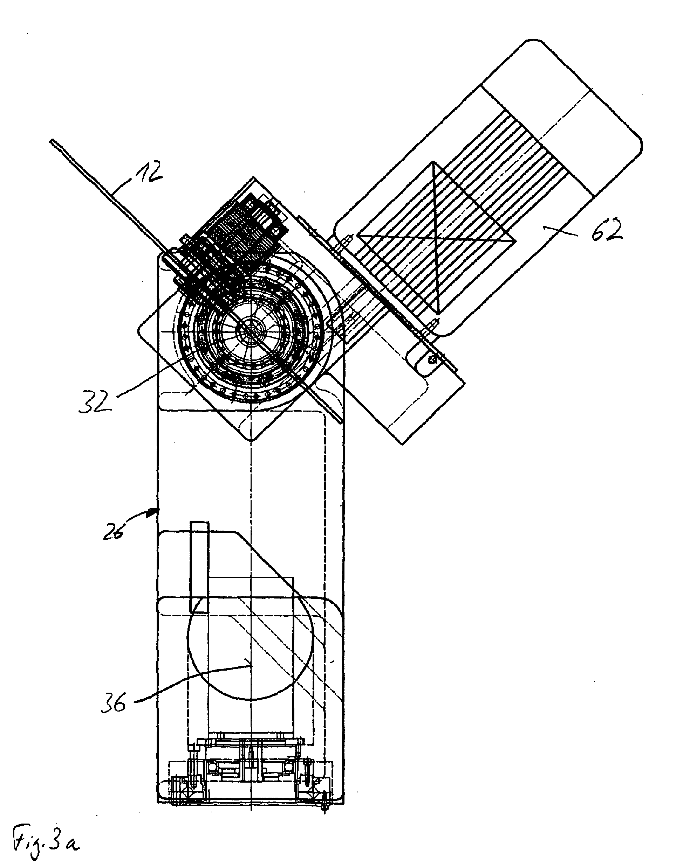

Die Antriebswelle 52 ist Teil der Antriebseinrichtung 22 und ist mit einer Riemenscheibe 58 versehen. Eine weitere Riemenscheibe 60 ist im Gehäuse der Antriebseinrichtung 22 angeordnet und wird von einem Elektromotor 62, sichtbar in Fig. 3a, angetrieben. Die beiden Riemenscheiben 58, 60 sind mittels eines Riemens miteinander verbunden. Um eine unterschiedliche Drehzahl des Sägeblatts 12 bei unveränderter Drehzahl des Elektromotors einstellen zu können, ist die Riemenscheibe 60 auswechselbar und innerhalb des Gehäuses der Antriebseinrichtung 22 auf die Antriebswelle 52 zu und von dieser weg verschiebbar. Dadurch wird die Möglichkeit geschaffen, durch sehr einfache mechanische Umbauten eine Drehzahländerung des Sägeblatts 12 herbeizuführen. Wenn grundsätzlich keine stufenlos variable Drehzahl des Sägeblatts 12 erforderlich ist, kann auf diese Weise die Gehrungssäge 10 auf unterschiedliche Schnittgeschwindigkeiten eingestellt werden, ohne dass ein Frequenzumrichter für den Elektromotor 62 erforderlich ist.

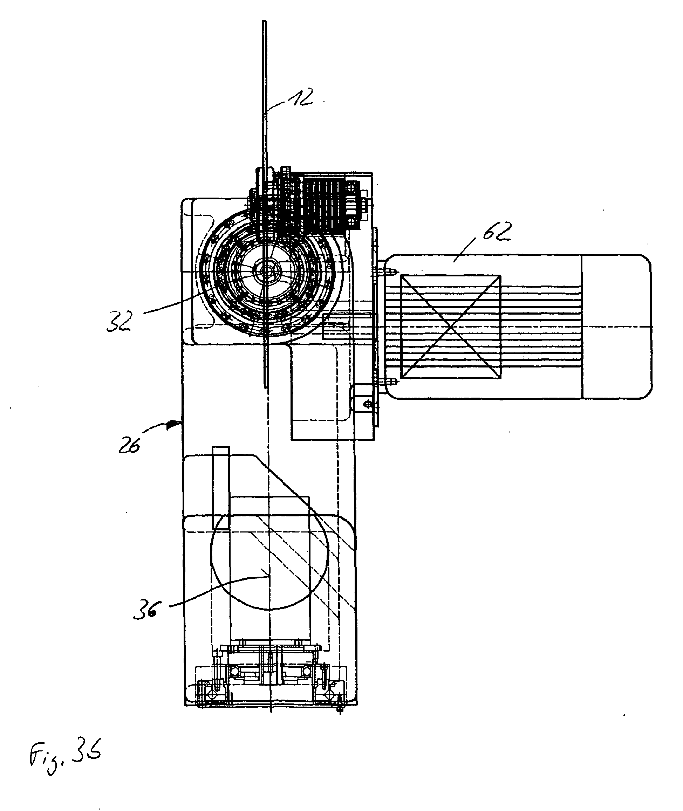

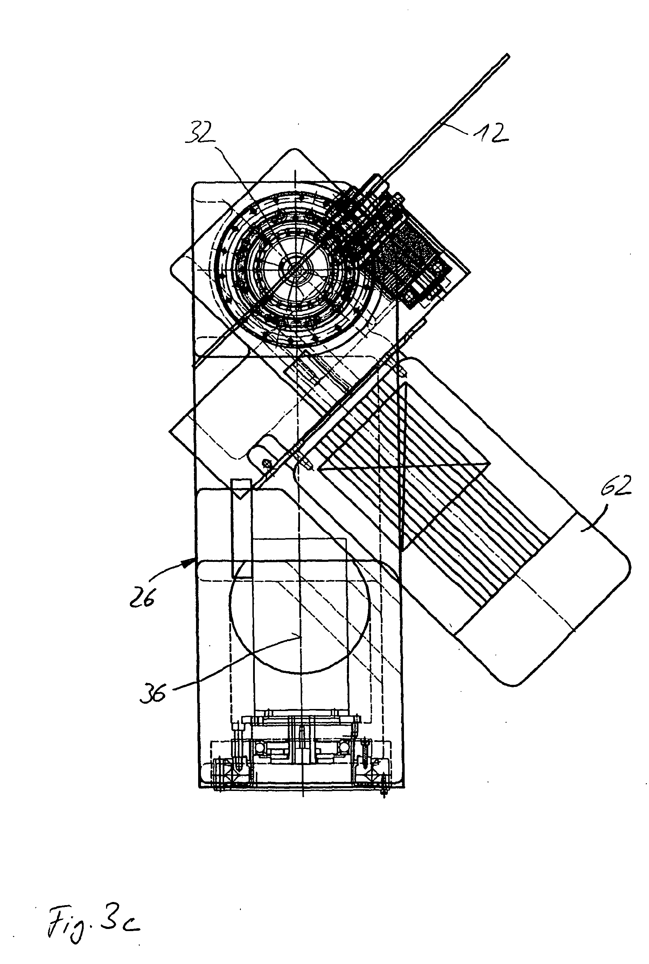

Die Darstellungen der Figuren 3a, 3b und 3c stellen Draufsichten auf die erfindungsgemäße Gehrungssäge 10 dar, wobei in der Darstellung der Fig. 3a das Sägeblatt 12 um 45° im Gegenuhrzeigersinn um die Schwenkachse 32 geneigt ist. Fig. 3b stellt eine Nulllage dar, in der das Sägeblatt 12 nicht verschwenkt ist. Fig. 3c stellt einen Zustand dar, in dem das Sägeblatt 12 um 45° im Uhrzeigersinn um die Schwenkachse 32 verschwenkt ist. Der Zustand der Figuren 3a, 3b und 3c entspricht grundsätzlich der Positionierung der Gehrungssäge 10 in Fig. 1. Eine Eintauchrichtung des Sägeblatts 12 in ein Werkstück 14 erfolgt im Zustand der Fig. 3a, 3b und 3c somit senkrecht zur Zeichenebene und in die Zeichenebene hinein, entsprechend dem Fall 48 der Fig. 1. Auch hier ist zu erkennen, dass sich die Antriebseinrichtung 22 und der Elektromotor 62 oberhalb des Bereichs des Sägeblatts 12 befinden, der in das in den Fig. 3a, 3b und 3c nicht dargestellte Werkstück 14 eintaucht. Grundsätzlich sind der Gehrungssäge 10 daher im Extremfall Schwenkwinkel um die Schwenkachse 32 von ± 90° zu realisieren, ohne dass ein Schnitttiefenverlust dabei auftreten würde. Die Säule 42 aus den Fig. 1 und 2 ist in den Fig. 3a, 3b und 3c nicht dargestellt.

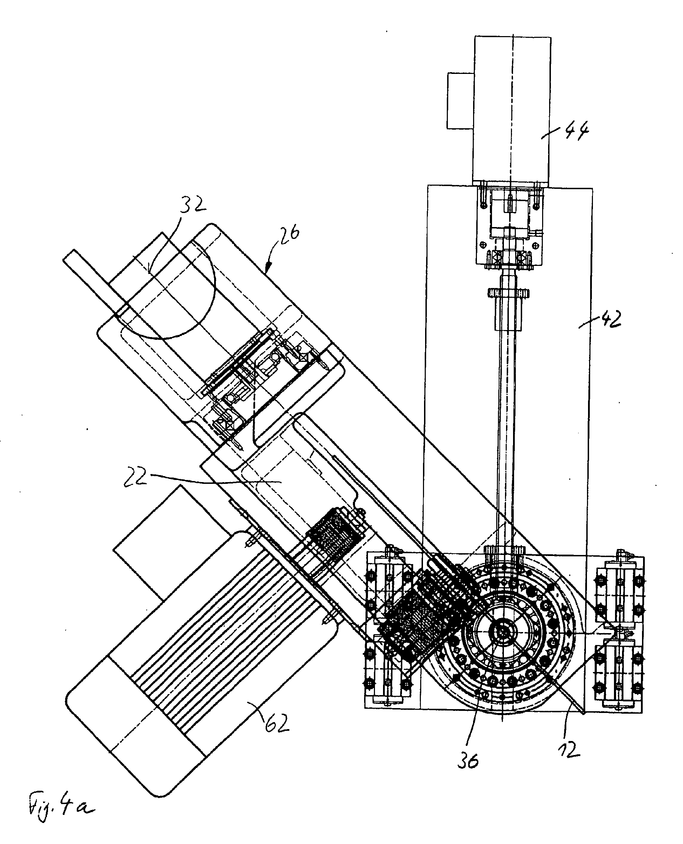

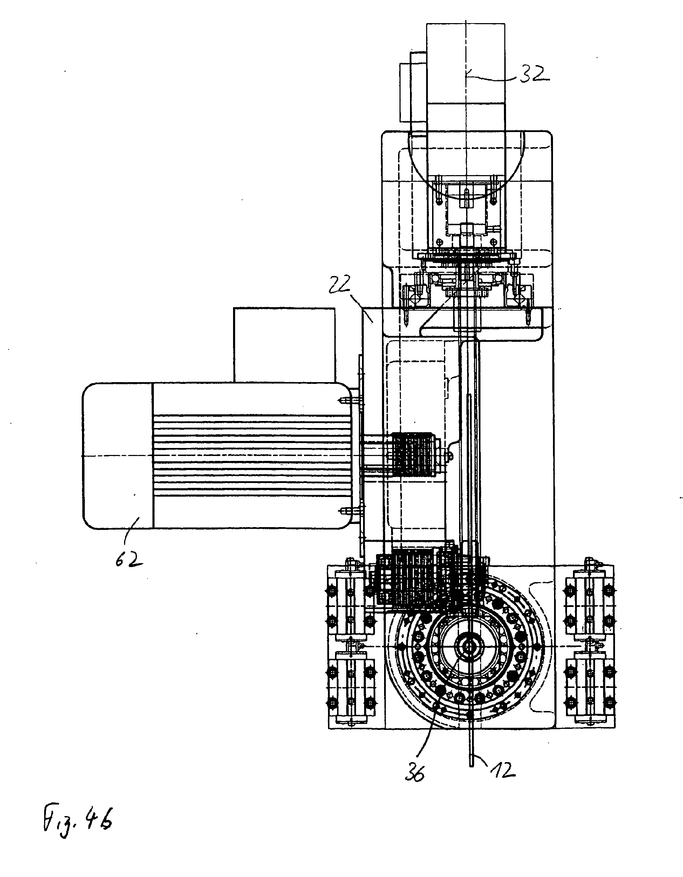

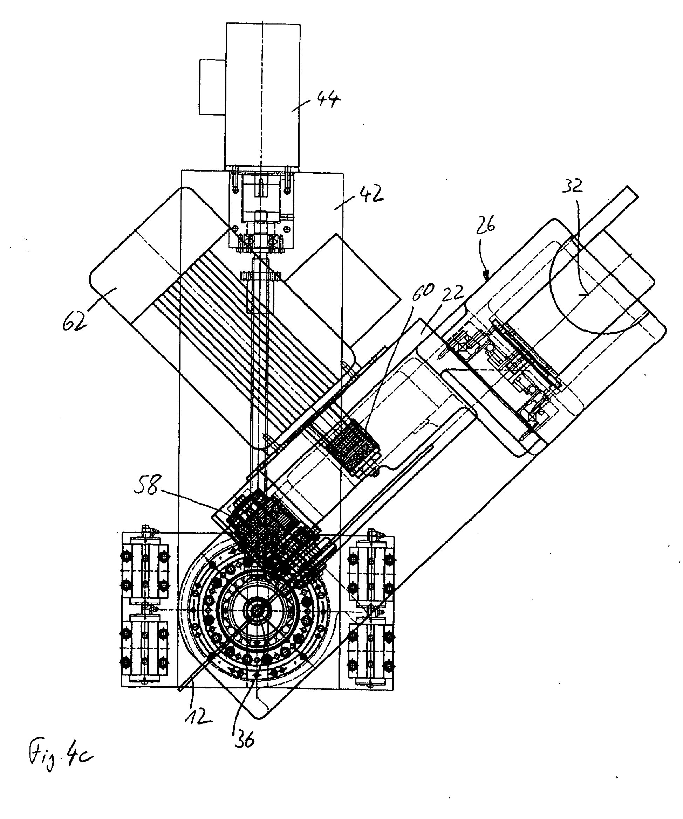

Die Figuren 4a, 4b und 4c zeigen jeweils eine Vorderansicht der erfindungemäßen Gehrungssäge 10, wobei in der Fig. 4a der U-artige Halter 26 um einen Neigewinkel um die Neigeachse 36 von 45° im Gegenuhrzeigersinn verschwenkt ist. In der Fig. 4b ist ein Neigewinkel von 0° eingestellt. In der Fig. 4c ist der U-artige Halter 26 um 45° im Uhrzeigersinn gegenüber der Nulllage der Fig. 4b verschwenkt. Die Figuren 4a, 4b und 4c zeigen Einstellungen der Gehrungssäge 10, bei denen mittels einer Drehung um die Neigeachse 36 ein Gehrungsschnitt erfolgen soll. Eine Eintauchrichtung in den Fig. 4a, 4b und 4c liegt folglich senkrecht zur Zeichenebene und aus dieser heraus, entsprechend dem Pfeil 50 in der Fig. 2. Es ist anhand der Figuren 2, 4a, 4b und 4c gut zu erkennen, dass der dargestellte beispielhafte Neigewinkelbereich von ± 45° ohne Schnitttiefenverlust abgedeckt werden kann, da sich die Antriebseinrichtung 22 mit dem Elektromotor 62 und auch der komplette übrige Aufbau der Gehrungssäge 10 in Eintauchrichtung gesehen hinter einem freien Bereich des Sägeblatts 12 angeordnet sind. Über die in den Figuren 4a, 4b und 4c gezeigten Einstellwinkel hinaus sind mit der erfindungsgemäßen Gehrungssäge daher grundsätzlich Neigewinkel von ± 90° abdeckbar, im Prinzip sogar noch darüber hinaus.

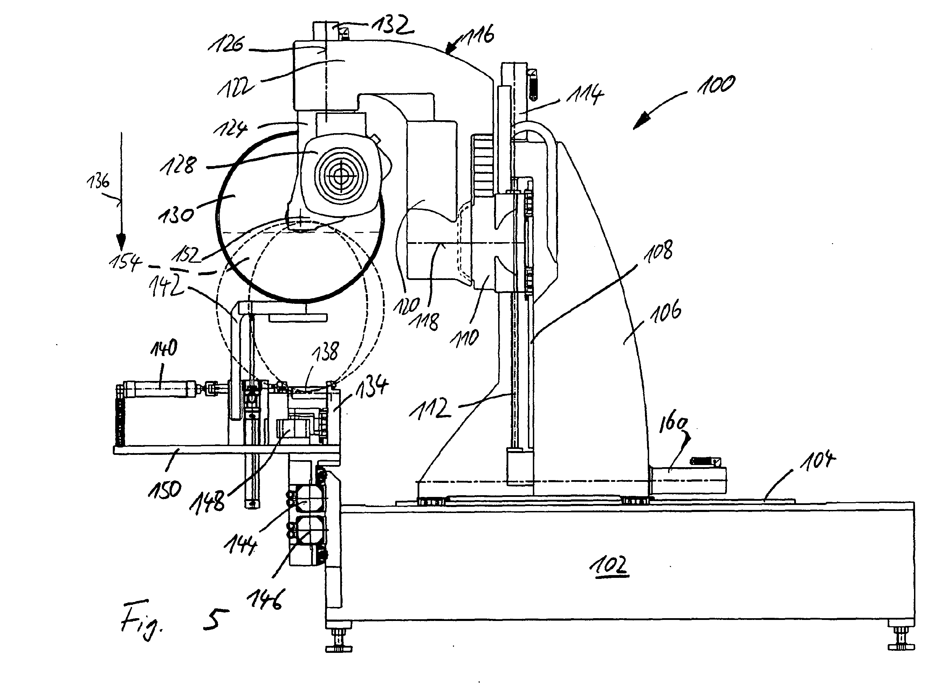

Die Seitenansicht der Fig. 5 zeigt eine Gehrungssäge 100 gemäß einer weiteren bevorzugten Ausführungsform der Erfindung. Die Gehrungssäge 100 weist eine Maschinenbasis 102 auf, die beispielsweise auf einem Hallenboden steht. Auf einer Oberseite der Maschinenbasis 102 sind Führungsschienen 104 vorgesehen, auf denen eine Säule 106 verfahrbar angeordnet ist. Die Säule 106 ist in der Darstellung der Fig. 5 nach rechts und links verfahrbar und ein Verfahrweg wird mittels eines Servomotors 160 erreicht. Der Servomotor 160 kann beispielsweise ein Zahnrad antreiben, das mit einer auf der Basis 102 parallel zu den Führungsschienen 104 angeordneten Zahnstange kämmt.

Die Säule 106 ist ebenfalls mit Führungsschienen 108 versehen, an denen ein Zwischenstück 110 verschiebbar geführt ist. Das Zwischenstück 110 kann entlang der Führungsschienen 108 nach oben und unten und senkrecht zum Verfahrweg der Säule 106 auf der Maschinenbasis 102 verfahren werden. Um das Zwischenstück 110 entlang einer Hochrichtung der Säule 106 zu bewegen, ist eine Gewindespindel 112 vorgesehen, die parallel zu den Führungsschienen 108 angeordnet ist, das Zwischenstück 110 durchsetzt und mittels eines Servoantriebs 114 in Drehbewegung versetzt werden kann. Die Gewindespindel 112 ist an der Säule 106 drehbar gelagert und greift in ein geeignetes Gegenstück am Zwischenstück 110 ein.

An dem Zwischenstück 110 ist ein L-artiger Haltearm 116 um eine Neigeachse 118 schwenkbar gelagert. Ein Schwenkantrieb ist in der Darstellung der Fig. 5 nicht dargestellt, hierfür wird aber zweckmäßigerweise ebenfalls ein Servoantrieb verwendet. Die Neigeachse 118 verläuft parallel zu einer Verschieberichtung entlang den Führungsschienen 104. Der L-artige Haltearm 116 kann relativ zum Zwischenstück 110 um die Neigeachse 118 um wenigstens ± 90° geschwenkt werden.

Der Haltearm 116 ist mit einem Schenkel 120 schwenkbar am Zwischenstück 110 befestigt und im Bereich des freien Endes einer Basis 122 des Haltearms 116 ist ein Träger 124 um eine Schwenkachse 126 verschwenkbar am Haltearm 116 angeordnet. Der Träger 124 trägt eine Antriebseinrichtung 128 für ein Sägeblatt 130. Zum Verschwenken des Trägers 124 und somit des Sägeblatts 130 um die Schwenkachse 126 ist ein Servoantrieb 132 vorgesehen. Die Schwenkachse 126 ist senkrecht zur Neigeachse 118 angeordnet und ein Schnittpunkt der Schwenkachse 126 und der Neigeachse 118 liegt in einer Ebene, in der auch eine Vorderseite eines Werkstückanschlags 134 angeordnet ist. In der in Fig. 5 dargestellten Stellung liegt die Schwenkachse 126 unabhängig von einem Neigewinkel um die Neigeachse 118 des Haltearms 116 immer in einer Ebene, die von einer dem Werkstück zugewandten Vorderseite des Werkstückanschlags 134 aufgespannt ist. Eine solche Anordnung der Schwenkachse 126 wird mittels Verfahren der Säule 106 entlang der Führungsschienen 104 zweckmäßigerweise immer dann gewählt, wenn eine Eintauchrichtung 136 parallel zur Schwenkachse 126 gewählt wird. Auf diese Weise kann ein Auswandern des Sägeblatts 130 in der Ebene des Werkstückanschlags 134 auch bei unterschiedlichen Schwenkwinkeleinstellungen vermieden werden.

Die Säule 106 und der Haltearm 116 sind jeweils als hohle Gussteile ausgebildet. Auf diese Weise kann eine extreme Steifigkeit der Säule 106 und des Haltearms 116 gewährleistet werden, die für eine hohe Schnittpräzision der Gehrungssäge 100 von großer Bedeutung ist. Wie in Fig. 5 gestrichelt angedeutet ist, übergreift der Schenkel 120 des Haltearms 116 mit einem umlaufenden Kragen einen sich konisch verjüngenden Fortsatz des Zwischenstücks 110. Durch diese Gestaltung kann weitgehend vermieden werden, dass von dem Sägeblatt 130 abfliegende Sägespäne in die Lagerung zwischen Zwischenstück 110 und Haltearm 116 eintritt.

An der Maschinenbasis 102 sind neben dem Werkstückanschlag 134 noch Werkstückauflagerollen 138 angeordnet. Ein zu bearbeitendes Werkstück wird demzufolge auf die Werkstückauflagerollen 138 aufgelegt, wird dann mittels zweier Horizontalspanner 140, von denen in Fig. 5 lediglich einer zu erkennen ist, gegen den Werkstückanschlag 134 gedrückt und mittels zweier Vertikalspanner 142, von denen in Fig. 5 ebenfalls lediglich einer zu erkennen ist, gegen die Werkstückauflagerollen 138 gepresst. Auf diese Weise kann das Werkstück während der Bearbeitung sicher festgehalten werden. Die Vertikalspanner 142 sind mittels jeweils eines Servoantriebs 144, 146 in einer senkrecht zu den Führungen 104 liegenden Richtung, in der Darstellung der Fig. 5 also in die Papierebene hinein und aus dieser heraus, verschiebbar. Bei Einstellung unterschiedlicher Schwenkwinkel um die Schwenkachse 126 und unterschiedlicher Neigewinkel um die Neigeachse 118 des Sägeblatts 130 kann dadurch sichergestellt werden, dass die Vertikalspanner ein Werkstück immer möglichst nahe am Sägeblatt 130 spannen.

Es ist im übrigen auch möglich, während des Eintauchens des Sägeblatts 130 die Vertikalspanner 142 zusammen mit dem Werkstück zu verschieben, um eine Relativbewegung von Sägeblatt 130 und Werkstück zu erzielen. Dies ist dadurch möglich, dass das Werkstück auf den Werkstückauflagerollen 138 aufliegt und auch der Werkstückanschlag 134 und der Horizontalspanner 140 jeweils mit drehbar gelagerten Rollen an dem Werkstück angreifen. Sowohl die Vertikalspanner 142 als auch die Horizontalspanner 140 sind jeweils mit Spannzylindern versehen, die beispielsweise pneumatisch aktivierbar sind.

Im Bereich der Werkstückauflage ist weiterhin ein Tischhebezylinder 148 vorgesehen, mit dem der gesamte Werkstückauflagetisch 150 angehoben und abgesenkt werden kann. Dies ist insbesondere bei der Bearbeitung von eloxierten Profilen von Bedeutung, wenn bei einem Weitertransport des Profils sichergestellt werden soll, dass die Profilaußenseite nicht verkratzt wird.

In der Darstellung der Fig. 5 ist auch gut zu erkennen, dass in der dargestellten Stellung mit einer zur Schwenkachse 126 parallelen Eintauchrichtung 136 die Eintauchrichtung immer parallel zu einer längeren Ellipsenachse des Sägeblatts 130 liegt, wenn dessen Projektion auf eine durch die zueinander senkrechten Führungsschienen 104, 108 aufgespannte Ebene betrachtet wird. Auf diese Weise und durch die spezielle, schnabelartige Gestaltung des Trägers 124 in einem die Drehachse 152 des Sägeblatts 130 umgebenden Bereich kann mit der Gehrungssäge 100 eine sehr große Eintauchtiefe des Sägeblatts 130 unabhängig von einem eingestellten Schwenkwinkel um die Schwenkachse 126 realisiert werden. Wie bei den vorstehend beschriebenen Ausführungsformen bleibt dann, wenn man das Sägeblatt parallel zu dessen Drehachse 152 betrachtet, ein kreissegmentförmiger Bereich 154 des Sägeblatts frei, der bis unmittelbar an die Antriebsachse des Sägeblatts 130 heranreicht und für eine maximale Eintauchtiefe genutzt werden kann. In gleicher Weise bleibt senkrecht hierzu ebenfalls en kreissegmentförmiger Bereich gleicher Größe frei, der zur Erzielung einer maximalen Eintauchtiefe bei einer Eintauchrichtung parallel zur Neigeachse 118 genutzt werden kann, wie nachstehend noch beschrieben wird.

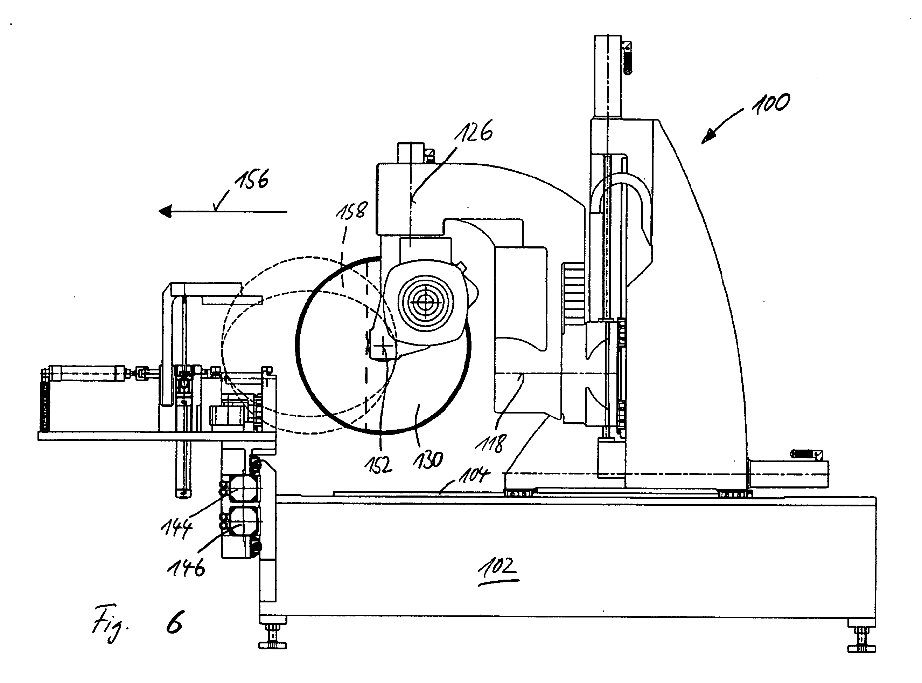

Die Darstellung der Fig. 6 zeigt die Gehrungssäge 100 in einer zweiten Position, in der eine Eintauchrichtung 156 des Sägeblatts 130 parallel zur Neigeachse 118 liegt. Auch in dieser Position bleibt ein kreissegmentförmiger Bereich 158 des Sägeblatts 130 frei, der die gleiche Größe wie der Bereich 154 der Fig. 5 aufweist und für eine maximale Eintauchtiefe des Sägeblatts 130 genutzt werden kann. Wie anhand der gestrichelten Ellipse dargestellt ist, liegt die Eintauchrichtung 156 bei Einstellung eines Neigewinkels um die Neigeachse 118 immer parallel zu einer längeren Ellipsenachse einer Projektion des Sägeblatts 130 auf die durch die zueinander senkrechten Führungsschienen 104, 108 aufgespannte Ebene. Sowohl bei einer Eintauchrichtung 156 parallel zur Neigeachse 118 als auch einer Eintauchrichtung 136 parallel zur Schwenkachse 126 kann somit stets die maximal mögliche Eintauchtiefe des Sägeblatts 130 genutzt werden. Diese maximale Eintauchtiefe steht jeweils über einen prinzipiell unbegrenzten Schwenk- bzw. Neigewinkelbereich des Sägeblatts 130 zur Verfügung, der üblicherweise auf ± 45° oder maximal ± 90° begrenzt wird.

Um mit der erfindungsgemäßen Gehrungssäge 100 Schifterschnitte zu realisieren kann entweder das Werkstück, wie beschrieben, mittels der Servoantriebe 144 und 146 gleichzeitig zum Eintauchen des Sägeblatts 130 verfahren werden oder in nicht dargestellter Weise wird die Maschinenbasis 102 zusätzlich senkrecht zu den Führungsschienen 104 und damit in die Papierebene der Fig. 6 hinein und aus dieser heraus verschiebbar und steuerbar angeordnet.

## Patentansprüche

1. Gehrungssäge mit einem kreisförmigen Sägeblatt (12; 130), wobei das Sägeblatt (12; 130) um wenigstens eine Drehachse (32, 36; 118, 126) schwenkbar ist und mittels einer Verschiebeeinrichtung wenigstens parallel zur Drehachse (32, 36; 118, 126) und senkrecht hierzu verschiebbar ist, wobei die Verschiebeeinrichtung so ausgebildet ist, dass das Sägeblatt (12; 130) relativ zu einem Werkstück (14; 94) so platzierbar ist, dass bei Einstellung eines Winkels um die Drehachse (32, 36; 118, 126) in Bezug auf eine senkrecht zur Drehachse (32, 36; 118, 126) gesehen ellipsenförmige Projektion des Sägeblatts (12; 130) für zwei senkrecht zueinander angeordnete Drehachsen (32, 36; 118, 126) eine Eintauchrichtung (48, 50; 136, 156) in ein Werkstück (14) parallel zu einer größeren Ellipsenachse (96) verläuft und wobei eine Antriebseinrichtung des Sägeblatts (12; 130) so ausgebildet ist, dass senkrecht zur Eintauchrichtung und senkrecht zum Sägeblatt (12, 130) gesehen wenigstens ein kreisabschnittförmiger Bereich (154; 158) des Sägeblatts (12; 130), dessen Sehne senkrecht zur Eintauchrichtung (48, 50; 136, 156) angeordnet ist, frei bleibt und vollständig in das Werkstück (14; 94) eintauchen kann, wobei die Länge der Sehne des kreisabschnittförmigen Bereichs (154; 158) wenigstens die Hälfte des Sägeblattdurchmessers beträgt, **dadurch gekennzeichnet, dass** ein in einer Seitenansicht L-artiger Haltearm (116) oder ein U-artiger Haltebügel (26) vorgesehen ist, wobei an der Basis (122) des L-artigen Haltearms ein Träger (124) für die Antriebseinrichtung (128) mittels der Schwenkeinrichtung schwenkbar angeordnet ist, und ein von der Basis (122) ausgehender Schenkel (120) mittels der Neigeeinrichtung relativ zu einer Maschinenbasis (102) neigbar ist, oder wobei ein erster Schenkel (24) des U-artigen Haltebügels (26) als Träger für die Antriebseinrichtung (22) dient und gegenüber dem übrigen Haltebügel (26), d.h. dessen Basis (28) und dessen zweiten Schenkel (30), um eine Schwenkachse (32) verdrehbar ist und der zweite Schenkel (30) mittels der Neigeeinrichtung zur Maschinenbasis (18) verstellbar ist.

2. Gehrungssäge, insbesondere nach Anspruch 1, mit einem kreisförmigen Sägeblatt (12; 130), mit wenigstens einer Schwenkeinrichtung zum Schwenken des Sägeblatts (12; 130) um eine Schwenkachse (32; 126) und mit wenigstens einer Neigeeinrichtung zum Neigen des Sägeblatts (12; 130) um eine senkrecht zur Schwenkachse (32; 126) angeordnete Neigeachse (36; 118), und mit wenigstens einer Verschiebeeinrichtung zum Verschieben des Sägeblatts (12; 130) in zwei zueinander senkrechten Richtungen, wobei die Verschiebeeinrichtungen so ausgebildet sind, dass ein Schnittpunkt von Schwenkachse (32; 126) und Neigeachse (36; 118) relativ zu einer Werkstückauflage (16; 138) verschiebbar ist und dass das Sägeblatt (12; 130) relativ zu einem Werkstück (14) so platzierbar ist, dass eine Eintauchrichtung (48, 50; 136, 156) des Sägeblatts (12; 130) in das Werkstück (14) bei Verdrehung um die Schwenkachse (32; 126) parallel zur Schwenkachse (32; 126) oder bei Verdrehung um die Neigeachse (36; 118) parallel zur Neigeachse (36; 118) verläuft und dass eine Antriebseinrichtung (22; 128) für das Sägeblatt (12; 130) in einer Weise gestaltet ist, dass die Antriebseinrichtung (22; 128) senkrecht zum Sägeblatt (12; 130) gesehen dieses nur so weit abdeckt, dass wenigstens zwei kreisabschnittförmige Bereiche (154; 158) des Sägeblatts (12; 130), deren Sehnen senkrecht zueinander und senkrecht zur Neigeachse (36; 118) beziehungsweise zur Schwenkachse (32; 126) angeordnet sind, frei bleiben und in das Werkstück (14) eintauchen können, wobei die Länge der Sehnen der kreisabschnittförmigen Bereiche (154; 158) jeweils wenigstens die Hälfte des Sägeblattdurchmessers beträgt, **dadurch gekennzeichnet, dass** ein in einer Seitenansicht L-artiger Haltearm (116) oder ein U-artiger Haltebügel (26) vorgesehen ist, wobei an der Basis (122) des L-artigen Haltearms ein Träger (124) für die Antriebseinrichtung (128) mittels der Schwenkeinrichtung schwenkbar angeordnet ist und ein von der Basis (122) ausgehender Schenkel (120) mittels der Neigeeinrichtung relativ zu einer Maschinenbasis (102) neigbar ist, oder wobei ein erster Schenkel (24) des U-artigen Haltebügels (26) als Träger für die Antriebseinrichtung (22) dient und gegenüber dem übrigen Haltebügel (26), d.h. dessen Basis (28) und dessen zweiten Schenkel (30), um eine Schwenkachse (32) verdrehbar ist und der zweite Schenkel (30) mittels der Neigeeinrichtung zur Maschinenbasis (18) verstellbar ist.

3. Gehrungssäge nach Anspruch 1 oder 2, **dadurch gekennzeichnet, dass** die Länge der Sehne zwischen 90% und 98% des Sägeblattdurchmessers beträgt.

4. Gehrungssäge nach Anspruch 2 oder 3, **dadurch gekennzeichnet, dass** bei Einstellung eines Schwenk- oder Neigewinkels in bezug auf eine senkrecht zur Schwenkachse (32; 126) und senkrecht zur Neigeachse (36; 118) gesehen ellipsenförmige Projektion des Sägeblatts (12; 130) die Eintauchrichtung (48, 50; 136, 156) in ein Werkstück (14) parallel zur größeren Ellipsenachse verläuft.

5. Gehrungssäge nach wenigstens einem der vorstehenden Ansprüche, **dadurch gekennzeichnet, dass** in Richtung einer Antriebswelle (52; 152) für das Sägeblatt (12; 130) gesehen eine Außenkontur einer Antriebs- und Lagereinrichtung (22; 128) innerhalb eines rechtwinklig begrenzten Bereichs liegt, dessen einer Schenkel parallel zur Schwenkachse (32; 126) liegt und dessen anderer Schenkel parallel zur Neigeachse (36; 118) liegt.

6. Gehrungssäge nach wenigstens einem der vorstehenden Ansprüche, **dadurch gekennzeichnet, dass** die Antriebs- und Lagereinrichtung (22; 128) wenigstens in ihrem, eine Antriebswelle (52; 152) für das Sägeblatt (12; 130) umgebenden Bereich schnabelförmig gestaltet ist.

7. Gehrungssäge nach wenigstens einem der vorstehenden Ansprüche, **dadurch gekennzeichnet, dass** in Richtung einer Antriebswelle (52; 152) gesehen die Antriebs- und Lagereinrichtung (22; 128) in ihrem die Antriebswelle (52; 152) umgebenden Bereich senkrecht zur Antriebswelle (52; 152) angeordnete Begrenzungsflächen aufweist, die spitzwinklig oder maximal in einem rechten Winkel aufeinander zu laufen.

8. Gehrungssäge nach einem der vorstehenden Ansprüche, **dadurch gekennzeichnet, dass** der von der Basis (122) ausgehende Schenkel (120) mittels der Neigeeinrichtung mit einem Zwischenstück (110) verbunden ist, das mittels der wenigstens einen Verschiebeeinrichtung parallel zur Schwenkachse (126) und parallel zur Neigeachse (118) verschiebbar ist.

9. Gehrungssäge nach Anspruch 8, **dadurch gekennzeichnet, dass** das Zwischenstück (110) an einer Säule (106) parallel zur Schwenkachse (126) verschiebbar angeordnet ist und dass die Säule (106) auf einer Maschinenbasis (102) parallel zur Neigeachse (118) verschiebbar angeordnet ist.

## Claims

1. A mitre-cutting saw with a circular saw blade (12; 130), wherein the saw blade (12; 130) is at least capable of swivelling about a swivel axis (32, 36; 118, 126) and by means of a sliding device, at least capable of sliding parallel to the swivel axis (32, 36; 118, 126) and perpendicular to said axis, wherein the sliding device is formed such that the saw blade (12; 130) may be placed relative to a workpiece (14; 94) so that when an angle is set about the swivel axis (32, 36; 118, 126) an in-feed direction (48, 50; 136, 156) in a workpiece (14) extends, with respect to an elliptical projection of the saw blade(12; 130) for two swivel axes (32, 36; 118, 126) viewed perpendicular to the respective swivel axis (32, 36; 118, 126), parallel to a larger elliptic axis (96) and wherein a driving device of the saw blade (12; 130) is provided such that, viewed perpendicular to the in-feed direction and perpendicular to the saw blade (12, 130), at least a circular section (154; 158) of the saw blade (12; 130) remains free, the chord of which being located perpendicular to the in-feed direction (48, 50; 136, 156) and which can fully submerge into the workpiece (14; 94), wherein the length of the chord of the circular section (154; 158) in magnitude is at least half the saw blade diameter, **characterised in that** an L-shaped holding arm (116) or a U-shaped bracket (26) is provided in side view, wherein on the basis (122) of the L-shaped holding arm a carrier (124) for the driving device (128) is pivotally located by means of the swivelling device, and a leg (120) from the base (122) can be inclined by means of the tilting device relative to a machine basis (102), or wherein a first leg (24) of the U-shaped bracket (26) serves as a carrier for the driving device (22) and is rotatable relative to the rest of the bracket (26), i.e. its base (28) and its second leg, (30) about a pivotal axis (32) and the second leg (30) is adjustable by means of the tilting device relative to the machine base (18).

2. A mitre-cutting saw, particularly according to Claim 1, with a circular saw blade (12; 130), with at least a swivelling device for swivelling the saw blade (12; 130) about a swivel axis (32; 126) and with at least a tilting device for tilting the saw blade (12; 130) about a tilt axis (36; 118) perpendicular to the swivel axis (32; 126), and with at least a sliding device for sliding the saw blade (12; 130) in two directions perpendicular to one another, wherein the sliding devices are formed such that an intersection point of the swivel axis (32; 126) and tilt axis (36; 118) is movable relative to a workpiece support (16; 138) and that the saw blade (12; 130) may be placed relative to a workpiece (14) such that an in-feed direction (48, 50; 136, 156) of the saw blade (12; 130) into the workpiece (14) when rotated about the swivel axis (32; 126) runs parallel to the swivel axis (32; 126) or when rotated about the tilt axis (36; 118) runs parallel to the tilt axis (36; 118) and that a driving device (22; 128) for the saw blade (12; 130) is designed in a manner such that the driving device (22; 128) viewed perpendicular to the saw blade (12; 130) only covers it so far that at least two circular sections (154; 158) of the saw blade (12; 130), whose chords are arranged perpendicular to one another and perpendicular to the tilt axis (36; 118) or swivel axis (32; 126), remain free and can submerge into the workpiece (14), wherein the length of the chords of the circular sections (154; 158) is respectively equal to at least half of the saw blade diameter, **characterised in that** an L-shaped holding arm (116) or a U-shaped bracket (26) is provided in side view, wherein on the base (122) of the L-shaped holding arm a carrier (124) for the driving device (128) is provided swivel-mounted by means of the swivelling device and a leg starting from the base (122) may be tilted by means of the tilting device relative to a machine base (102), or wherein a first leg (24) of the U-shaped bracket (26) serves as a carrier for the driving device (22) and can be pivoted with respect to the rest of the bracket (26), i.e. its base (28) and its second leg (30), about a swivel axis (32) and the second leg (30) is adjustable by means of the tilting device relative to the machine base (18).

3. A mitre-cutting saw according to Claim 1 or 2 **characterised in that** the length of the chord lies between 90% and 98% of the saw blade diameter.

4. A mitre-cutting saw according to Claim 2 or 3, **characterised in that** when a swivel or tilt angle is set the in-feed direction (48, 50; 136, 156) extends with respect to the elliptical projection of the saw blade (12; 130) seen in a direction perpendicular to the swivel axis (32; 126) and perpendicular to the tilt axis (36; 118) parallel to the larger elliptical axis.

5. A mitre-cutting saw according to at least one of the preceding Claims, **characterised in that**, viewed in the direction of a drive shaft (52; 152) for the saw blade (12; 130) an outer contour of a drive and bearing device (22; 128) lies within a right angled bordered area, of which one leg lies parallel to the swivel axis (32; 126) and of which the other leg lies parallel to the tilt axis (36; 118).

6. A mitre-cutting saw according to at least one of the preceding Claims, **characterised in that** the drive and bearing device (22; 128) at least in its area surrounding a drive shaft (52; 152) for the saw blade (12; 130) is shaped like a beak.

7. A mitre-cutting saw according to at least one of the preceding Claims, **characterised in that** viewed in the direction of a drive shaft (52; 152) the drive and bearing device (22; 128) in its area surrounding the drive shaft (52; 152) features bordering surfaces arranged perpendicular to the drive shaft (52; 152) that are acute-angled or maximally run at right angle towards one another.

8. A mitre-cutting saw according to one of the preceding Claims, **characterised in that** the leg (120) originating from the base (122) is by means of the tilting device connected with a spacer (110), which is slidable by means of at least one sliding device parallel to the swivel axis (126) and parallel to the tilt axis (118).

9. A mitre-cutting saw according to Claim 8, **characterised in that** the spacer (110) is slidable on a column (106) parallel to the swivel axis (126) and that the column (106) is slidable on a machine base (102) parallel to the tilt axis (118).

## Revendications

1. Scie à onglet comprenant une lame de scie circulaire (12; 130), la lame de scie (12; 130) étant orientable autour d'au moins un axe de rotation (32, 36 ; 118, 126) et étant déplaçable au moins parallèlement à l'axe de rotation (32, 36 ; 118, 126) et perpendiculairement à celui-ci au moyen d'un dispositif de déplacement, le dispositif de déplacement étant réalisé de manière à ce que la lame de scie (12 ; 130) puisse être placée de telle façon par rapport à une pièce à usiner (14 ; 94) que, lors d'un réglage d'un angle autour de l'axe de rotation (32, 36 ; 118, 126), une direction de plongée (48, 50 ; 136, 156) dans une pièce à usiner (14) s'étend, par rapport à une projection de la lame de scie (12 ; 130) en forme d'ellipse vue perpendiculairement à l'axe de rotation (32, 36 ; 118, 126) pour deux axes de rotation (32, 36 ; 118, 126) disposés perpendiculairement l'un par rapport à l'autre, parallèlement à un axe d'ellipse plus grand (96), et un dispositif d'entraînement de la lame de scie (12 ; 130) étant réalisé de telle manière que, vu perpendiculairement à la direction de plongée et perpendiculairement à la lame de scie (12, 130), au moins une partie en forme de segment circulaire (154 ; 158) de la lame de scie (12 ; 130), dont la corde est disposée perpendiculairement à la direction de plongée (48, 50 ; 136, 156), reste libre et puisse plonger complètement dans la pièce à usiner (14 ; 94), la longueur de la corde de la partie en forme de segment circulaire (154 ; 158) étant d'au moins la moitié du diamètre de la lame de scie, **caractérisée en ce qu'**un bras de support (116) en forme de L en vue latérale ou un étrier de support (26) en forme de U est ménagé, un support (124) étant disposé de manière pivotante, au moyen du dispositif de pivotement, à la base (122) du bras de support en forme de L pour le dispositif d'entraînement (128), et un côté (120) partant de la base (122) étant inclinable par rapport à une base de la machine (102) au moyen du dispositif d'inclinaison, ou un premier côté (24) de l'étrier de support (26) en forme de U servant de support pour le dispositif d'entraînement (22) et étant orientable autour d'un axe de pivotement (32) par rapport au reste de l'étrier de support (26), c'est-à-dire par rapport à sa base (28) et à son second côté (30), et le second côté (30) étant réglable par rapport à la base de la machine (18) au moyen du dispositif d'inclinaison.

2. Scie à onglet, notamment selon la revendication 1, comprenant une lame de scie circulaire (12 ; 130), comprenant au moins un dispositif de pivotement destiné au pivotement de la lame de scie (12 ; 130) autour d'un axe de pivotement (32 ; 126) et comprenant au moins un dispositif d'inclinaison destiné à l'inclinaison de la lame de scie (12 ; 130) autour d'un axe d'inclinaison (36 ; 118) disposé perpendiculairement à l'axe de pivotement (32 ; 126), et comprenant au moins un dispositif de déplacement destiné au déplacement de la lame de scie (12 ; 130) dans deux directions perpendiculaires l'une par rapport à l'autre, les dispositifs de déplacement étant réalisés de manière à ce qu'un point d'intersection de l'axe de pivotement (32 ; 126) et de l'axe d'inclinaison (36 ; 118) soit déplaçable par rapport à un support de pièce à usiner (16 ; 138) et à ce que la lame de scie (12 ; 130) puisse être placée de telle manière par rapport à une pièce à usiner (14) qu'une direction de plongée (48, 50 ; 136, 156) de la lame de scie (12 ; 130) dans la pièce à usiner (14) s'étende parallèlement à l'axe de pivotement (32 ; 126) lors de la rotation autour de l'axe de pivotement ou parallèlement à l'axe d'inclinaison (36 ; 118) lors de la rotation autour de l'axe de rotation (36 ; 118) et à ce qu'un dispositif d'entraînement (22 ; 128) de la lame de scie (12 ; 130) soit conçu de manière à ce que le dispositif d'entraînement (22 ; 128), vu perpendiculairement par rapport à la lame de scie (12 ; 130), recouvre celle-ci seulement de manière à ce qu'au moins deux parties en forme de segment de cercle (154 ; 158) de la lame de scie (12 ; 130), dont les cordes sont disposées perpendiculairement l'une à l'autre et perpendiculairement par rapport à l'axe d'inclinaison (36 ; 118) respectivement à l'axe de pivotement (32 ; 126), restent libres et puissent plonger dans la pièce à usiner (14), la longueur des cordes des parties en forme de segment circulaire (154; 158) étant respectivement au moins de la moitié du diamètre de la lame de scie, **caractérisée en ce qu'**un bras de support (116) en forme de L en vue latérale ou un étrier de support (26) en forme de U est ménagé, un support (124) étant disposé de manière pivotante, au moyen du dispositif de pivotement, à la base (122) du bras de support en forme de L pour le dispositif d'entraînement (128), et un côté (120) partant de la base (122) étant inclinable par rapport à une base de la machine (102) au moyen du dispositif d'inclinaison, ou un premier côté (24) de l'étrier de support (26) en forme de U servant de support pour le dispositif d'entraînement (22) et étant orientable autour d'un axe de pivotement (32) par rapport à l'autre étrier de support (26), c'est-à-dire par rapport à sa base (28) et à son second côté (30), et le second côté (30) étant réglable par rapport à la base de la machine (18) au moyen du dispositif d'inclinaison.

3. Scie à onglet selon la revendication 1 ou 2, **caractérisée en ce que** la longueur de la corde est comprise entre 90% et 98% du diamètre de la lame de scie.

4. Scie à onglet selon la revendication 2 ou 3, **caractérisée en ce que**, lors du réglage d'un angle de pivotement ou d'inclinaison par rapport à une projection de la lame de scie (12 ; 130), en forme d'ellipse vue perpendiculairement à l'axe de pivotement (32 ; 126) et perpendiculairement à l'axe d'inclinaison, la direction de plongée (48, 50 ; 136, 156) dans une pièce à usiner (14) s'étend parallèlement au plus grand axe d'ellipse.

5. Scie à onglet selon au moins l'une des revendications précédentes, **caractérisée en ce que**, vu en direction d'un arbre de commande (52 ; 152) de la lame de scie (12 ; 130), un contour extérieur d'un dispositif d'entraînement ou de logement (22 ; 128) se situe à l'intérieur d'une partie limitée en angle droit, dont un côté se situe parallèlement à l'axe de pivotement (32 ; 126) et dont l'autre côté se situe parallèlement à l'axe d'inclinaison (36 ; 118).

6. Scie à onglet selon au moins l'une des revendications précédentes, **caractérisée en ce que** le dispositif d'entraînement ou de logement (22 ; 128) est conçu en forme de bec, au moins dans sa partie entourant un arbre de commande (52 ; 152) de la lame de scie (12 ; 130).

7. Scie à onglet selon au moins l'une des revendications précédentes, **caractérisée en ce que**, vu en direction d'un arbre de commande (52 ; 152), le dispositif d'entraînement ou de logement (22 ; 128) présente, dans sa partie entourant l'arbre de commande (52 ; 152), des surfaces de délimitation disposées perpendiculairement à l'arbre de commande (52 ; 152), qui convergent l'une vers l'autre en angle aigu ou au maximum en angle droit.

8. Scie à onglet selon l'une quelconque des revendications précédentes, **caractérisée en ce que** le côté (120) partant de la base (122) est raccordé à une pièce intermédiaire (110) au moyen du dispositif d'inclinaison, cette pièce intermédiaire étant déplaçable parallèlement à l'axe de pivotement (126) et parallèlement à l'axe d'inclinaison (118) au moyen de l'au moins un dispositif de déplacement.

9. Scie à onglet selon la revendication 8, **caractérisée en ce que** la pièce intermédiaire (110) est disposée sur une colonne (106) de manière déplaçable parallèlement à l'axe de pivotement (126) et **en ce que** la colonne (106) est disposée sur une base de la machine (102) de manière déplaçable parallèlement à l'axe d'inclinaison (118).
